# EUROPÄISCHE PATENTSCHRIFT

(11) **EP 3 240 127 B1**
(45) Veröffentlichungstag und Bekanntmachung des Hinweises auf die Patenterteilung: **02.06.2021**
(21) Anmeldenummer: 17166367.7
(22) Anmeldetag: 12.04.2017
(51) Int. Cl.: H02G 1/00

(54) **WERKZEUG UND SET ZUM FESTLEGEN VON EINBAUTEILEN IN UNTERPUTZ- ODER HOHLWANDDOSEN**
TOOL AND SET FOR FIXING PARTS IN FLUSH-MOUNTED OR CAVITY WALL BOXES
OUTIL ET KIT DE FIXATION D'ÉLÉMENTS DE MONTAGE DANS DES BOÎTIERS DE PAROIS CREUSES OU SOUS CRÉPI

(30) Priorität: 28.04.2016 DE 202016102267 U
(43) Veröffentlichungstag der Anmeldung: 01.11.2017
(73) Patentinhaber: Koch, Andreas, 29559 Wrestedt (DE)
(72) Erfinder: Koch, Andreas, 29559 Wrestedt (DE)
(74) Vertreter: Raffay & Fleck

(56) Entgegenhaltungen:
- WO-A2-2013/084255
- DD-A1- 279 632
- DE-A1-102005 009 316
- DE-A1-102006 039 026
- DE-B3-102009 017 683
- DE-C1- 10 033 598
- DE-U1- 20 014 116
- DE-U1- 29 905 482

## Beschreibung

Die vorliegende Erfindung betrifft ein Werkzeug zum Festlegen von Einbauteilen, wie Steckdosen, Schaltern oder Dimmern, in Unterputz- oder Hohlwanddosen. Die Erfindung betrifft ferner ein Set, welches aus einem derartigen Werkzeug sowie einer Anreißschablone zum Markieren der Einbauposition(en) eines oder mehrerer Anbauteile in Unterputz- oder Hohlwanddosen besteht.

Es ist im Innenausbau von Häusern und anderen Gebäuden seit vielen Jahren üblich, elektrische Versorgungsleitungen, aber auch elektrische Signalleitungen, wie z.B. koaxiale Antennenkabel, unter Putz bzw. versteckt in Hohlräumen von Hohlwänden zu verlegen, um einerseits eine optisch als störend empfundene Aufputz- bzw. Aufwandverlegung zu vermeiden und um andererseits auch durch den verdeckten Einbau den Leitungen einen gewissen Schutz vor äußeren Einflüssen zu geben.

Dort, wo in entsprechende Leitungssysteme Anschlüsse oder Schaltelemente integriert werden, werden diese dann klassischerweise in sogenannte Unterputz- oder Hohlwanddosen eingebaut. Entsprechende Dosen sind regelmäßig aus Kunststoff gefertigte, einen typischerweise im Querschnitt kreisförmigen Aufnahmeraum aufweisende, topfartige Einsätze, die in einer Wand versenkt werden. Handelt es sich hierbei um eine Massivwand, so werden diese Dosen in der Regel als Unterputzdosen bezeichnet, ist die Wand hingegen als Hohlwand gebildet (beispielsweise in Leichtbauweise), so werden entsprechende Bauelemente als Hohlwanddosen bezeichnet. Diese Varianten unterscheiden sich typischerweise in der Art der jeweiligen Festlegung bzw. Verankerung in der Wand, haben allerdings ansonsten eine gleichartige Funktion. In diese Dosen hinein werden nämlich entsprechende Enden der jeweiligen Kabel (elektrische Versorgungskabel, Signalkabel) geführt, um dort mit Einbauteilen, die in dem Aufnahmeraum der Dosen aufgenommen werden, verbunden und entsprechend angeschlossen und verschaltet zu werden. Entsprechende Einbauteile können beispielsweise sein: elektrische Netzsteckdosen, Schalter (beispielsweise für Lichtschalter oder zum Beschalten von Steckdosen), Dimmerschalter, Steckdosen für Antennenkabel, Steckdosen für Datenkabel (z.B. LAN-Kabelverbindungen) oder auch Schalter- oder Tasterelemente für moderne busgesteuerte Hauselektrik.

Für den Einbau der entsprechenden Einbauteile in die Dosen (Unterputz- und Hohlwanddosen werden nachfolgend der Vereinfachung wegen auch gemeinschaftlich einfach als "Dosen" referenziert) werden diese Einbauteile zunächst mit den Anschlüssen der in die Dose geführten Kabel verbunden und müssen dann richtig in die Dose eingesetzt und dort festgelegt werden. Das Festlegen erfolgt dabei in der Regel durch ein Spreizen bzw. Ausstellen von Klemmelementen bzw. Halteklauen, die über einen Schraubmechanismus betätigt werden. Mit diesen Klemmelementen bzw. Halteklauen verklemmt bzw. verkrallt sich das Einbauteil in der Kunststoffwand der Dose und wird so in dem Aufnahmeraum der Dose festgelegt und zurückgehalten. Hierfür müssen regelmäßig zwei Schrauben mit einem passenden Schraubendreher festgezogen werden. Ein Installateur, der die entsprechenden Einbauteile in die Dosen einbringt und dort festlegt, tut dies häufig in kniender Haltung, da die meisten der Dosen auf einer Normhöhe von etwa 25 cm oberhalb des Bodens angeordnet sind. In dieser knienden Haltung muss der Installateur das Einbauteil manuell in der Dose halten und ausrichten und dann mit einem manuell oder motorisch betriebenen Schraubendreher, z.B. einem Akkuschrauber, die beiden Schrauben zum Ausstellen der Klemmelemente bzw. Halteklauen festziehen. Dabei wird typischerweise und häufig nicht nur eine einzelne Dose mit einem Einbauteil, wie etwa einer Steckdose belegt, sondern es sind mehrere Dosen unmittelbar nebeneinander angeordnet, in die dann z.B. jeweils ein Einsatz zum Bilden einer Mehrfachsteckdose oder Steckleiste (häufig bis zu fünf Steckdosen in einer Reihe) eingesetzt werden müssen. Beim Einbau der Einbauteile in derartige Mehrfachdosenanordnungen muss der Installateur zudem noch darauf achten, die einzelnen Einbauteile in einer solchen Weise zueinander auszurichten, dass später die auf die Einbauteile aufzusetzenden Blend- bzw. Funktionselemente (Blendrahmen, Schalter oder Steckdoseneinsätze oder dgl.) passend aufgebracht werden können.

Entsprechend ist die Montage von Einbauteilen in Dosen ein zeitaufwendiger und bei den meisten Installateuren weithin unbeliebter Arbeitsvorgang. Durch das lange Arbeiten in kniender oder gebückter Haltung ist dieser Arbeitsvorgang zudem der Gesundheit abträglich. Viele Installateure klagen, nachdem sie über einen langen Zeitraum, z.B. auf einer großen Baustelle, eine Vielzahl von Einbauteilen in Dosen festgelegt haben, über Knieschmerzen oder andere körperliche Probleme.

In der DE 100 33 598 C1 ist eine Vorrichtung zum Montieren von Unterputzschaltern bzw. -steckdosen offenbart, das zwei, jeweils über einen eigenen Antriebsmotor angetriebene, parallel orientierte Schraubspitzen aufweist. Mit diesen beiden Schraubspitzen werden dann zwei Schrauben von Unterputzschaltern bzw. -steckdosen zeitgleich ein Einschraubrichtung gedreht, die Unterputzsteckdose, der Unterputzschalter so in einer Aufnahme festgelegt. Der Abstand zwischen den beiden Motoren ist über eine Spindel einstellbar, um diesen an den Abstand zwischen den Befestigungsschrauben verschiedener Steckdosen oder Schalter anpassen zu können.

Der Nachteil an diesem vorbekannten Werkzeug ist, dass hier zwei Motoren verwendet werden, die unabhängig voneinander die Schraubspitzen antreiben. Dies kann insbesondere dann zu Problemen führen, wenn die Schrauben der Steckdose / des Schalters unterschiedlich weit einzuschrauben sind, um die mit ihnen jeweils verbundenen Klemmelemente ausreichend weit auszustellen. Dies kann nicht nur zu einem schiefen Einbau der Steckdosen / Schalter führen, sondern auch dazu, dass eines der Klemmelemente zu stark ausgespreizt wird, dadurch die Aufnahme beschädigt

Die Dokumente WO2013084255A2 und DE102005009316A1 offenbaren Geräte gemäß dem Oberbegriff des Anspruchs 1.

An dieser Stelle setzt die Erfindung an, die es sich zur Aufgabe gemacht hat, hier eine Verbesserung 2- der vorbekannten Geräte zu bieten in Form eines eine zuverlässigere Festlegung von Einbauteilen in Dosen ermöglichenden Werkzeuges. In einem weiteren Aspekt soll zugleich die Ausrichtung des Einbauteils in der Dose vereinfacht werden, insbesondere für eine verbesserte Ausrichtung der Einbauteile, die in einer Mehrfach-Dosen-Anordnung aus benachbart zueinander angeordneten Dosen zur Bildung von Steckleisten oder dgl. Mehrfacheinheiten anzuordnen sind, geschaffen werden.

Diese Aufgabe wird zunächst gelöst durch ein Werkzeug zum Festlegen von Einbauteilen, wie Steckdosen, Schaltern oder Dimmern, in Unterputz- oder Hohlwanddosen mit den Merkmalen des Anspruchs 1. Vorteilhafte Weiterbildungen eines erfindungsgemäßen Werkzeuges sind in den abhängigen Ansprüchen 2 bis 15 angegeben. In einem weiteren Aspekt der Erfindung wird ein Set mit den Merkmalen des Anspruches 16 angegeben, welches aus einem Werkzeug der neuen und erfindungsgemäßen Art sowie eine Anreißschablone zum Markieren der Einbauposition(en) eines oder mehrerer Anbauteile in Unterputz- oder Hohlwanddosen gebildet ist. Eine vorteilhafte Weiterbildungen eines solchen Sets ist in Anspruch 17 bezeichnet.

Das neuartige Werkzeug weist zunächst in Übereinstimmung mit dem Stand der Technik einen Werkzeugkörper, jeweils zwei eine Rotationsachse aufweisende und mit den Rotationsachsen parallel zueinander orientiert und unter Belassung eines Abstandes zueinander an dem Werkzeugkörper angeordnete und jeweils mit einer Abtriebswelle verbundene, jeweils ein von dem Werkzeugkörper vorstehendes freies Ende aufweisende Schraubwerkzeugelemente auf. Erfindungsgemäß ist dazu eine an dem Werkzeugkörper angeordnete, mit einem Antriebsdrehmoment beaufschlagbare Antriebswelle vorgesehen, die mit den Abtriebswellen über ein Getriebe verbunden ist. Das Getriebe koppelt die Antriebswelle mit den Abtriebswellen in einer solchen Weise, dass ein an der Antriebswelle anliegendes Drehmoment auf die Abtriebswellen zum gleichsinnig rotierenden Antreiben derselben und darüber zum gleichsinnigen Rotieren der mit den Abtriebswellen verbundenen Schraubwerkzeugelemente um deren jeweilige Rotationsachse übertragen wird.

Wie bei dem bekannten Stand der Technik auch, weist das erfindungsgemäße Werkzeug also zwei parallel zueinander orientierte und zum gleichsinnigen Rotieren antreibbare Schraubwerkzeugelemente auf, mit denen also in einem Arbeitsgang zwei Schrauben zum Ausstellen der Klemmelemente bzw. Halteklauen eines Einbauteils und damit zum Festlegen des Einbauteils in der Dose betätigt und festgezogen (bzw. auch gelöst) werden können. Somit kann in einem Arbeitsgang und mit großer Erleichterung für den Installateur ein Festlegen eines Einbauteils erfolgen, ohne dass hier zunächst eine der Schrauben und im Anschluss die zweite individuell festgezogen werden müssen. Schlimmstenfalls muss der Installateur bei der herkömmlichen Installationsweise sogar immer abwechselnd die eine und die andere Schraube anziehen, um somit eine zentrierte Ausrichtung des Einbauteils in der Dose zu erreichen. Auch dieser Aufwand entfällt mit dem erfindungsgemäßen Werkzeug.

Das Besondere an dem erfindungsgemäßen Werkzeug ist also darin zu sehen, dass es eine einzige Antriebswelle aufweist, die mit einem Antriebsmotor verbun den werden kann oder verbunden ist und von der das Drehmoment über das Getriebe auf die beiden Abtriebswellen übertragen (und aufgeteilt) wird.

Das Getriebe umfasst ein Ausgleichsgetriebe. Ein solches Ausgleichsgetriebe, das auch als Differenzialgetriebe bezeichnet werden kann, stellt sicher, dass bei einem Verwenden des Werkzeuges beide anzugreifenden Schrauben des Einbauteils mit einem ausreichenden Drehmoment beaufschlagt werden, und nicht etwa, wenn eine der Schrauben festsitzt und der Antrieb für ein weiteres Festziehen dieser Schraube nicht mehr genügt, eine zweite Schraube nicht in ausreichendem Maße fest angezogen ist, so dass das mit ihr verbundene Klemmelement bzw. die Halteklaue des Einbauteils nicht mit ausreichender Kraft gegen die Innenwand der Dose drückt und damit das Einbauteil nicht ausreichend festsitzt.

Weiterhin kann, z.B. durch ein entsprechendes Getriebe, eine Umschaltmöglichkeit vorgesehen sein, um den Drehsinn der Abtriebswellen zu invertieren. So kann das Werkzeug eingerichtet werden, um die Schrauben eines Einbauteils festzuziehen, respektive um diese (mit entgegengesetztem Drehsinn der Schraubbits) zu lösen. Insbesondere kann diese Umschaltmöglichkeit so gebildet sein, dass unterschiedliche Maximaldrehmomente in Einschraub- und Löserichtung vorgesehen sind. Insbesondere kann ein maximales Drehmoment in Löserichtung größer ausgelegt sein, als ein maximales Drehmoment in Einschraubrichtung, um so sicherzustellen, dass mit dem Werkzeug Einbauteile stets aus ihrer Position gelöst werden können.

An dieser Stelle ist zu betonen, dass mit dem erfindungsgemäßen Werkzeug entsprechende Einbauteile selbstverständlich in Unterputz- oder Hohlwanddosen festgelegt werden können. Sofern auf den Einbau einer solchen Dose jedoch verzichtet wird, ein Einbauteil beispielsweise unmittelbar in einer Kernbohrung einer Wand einzusetzen ist, kann dies natürlich auch mit dem erfindungsgemäßen Werkzeug erfolgen.

Die Schraubwerkzeugelemente können dabei fest angeordnete Schraubansätze, z.B. ein Schlitzschraubendreherelement oder ein Kreuzschraubendreherelement oder ein Inbusschraubendreherelement oder ein vergleichbares übliches Schraubendreherwerkzeug, umfassen. Sie können aber auch durch in entsprechenden Bithalterungen angeordnete, austauschbare Schraubbits gebildet sein, um so z.B. eine Anpassung auf unterschiedliche Systeme der verschiedenen Hersteller von Einbauteilen und entsprechenden Systemen vornehmen zu können.

Um zu verhindern, dass mit dem Werkzeug ein zu hohes Drehmoment auf die Schrauben aufgebracht wird, um mit Vorteil sogar sicherstellen zu können, dass die die Halteklauen bzw. Klemmelemente ausstellenden Schrauben mit einem von dem Hersteller vorgegebenen Nenndrehmoment angezogen werden, kann vorgesehen sein, dass das Werkzeug wenigstens eine mit der Antriebswelle oder wenigstens eine der Abtriebswellen verbundene Rutschkupplung zur Begrenzung eines übertragenen Drehmoments aufweist. Insbesondere kann jede der Abtriebswellen über je eine Rutschkupplung an das Getriebe angebunden sein. Auf diese Weise ist sichergestellt, dass beide mit dem erfindungsgemäßen Werkzeug gleichzeitig festzuziehenden Schrauben, die die Klemmelemente bzw. die Halteklauen ausstellen, mit einem vorgebbaren Drehmoment beaufschlagt, jedoch nicht überdreht werden. Dabei kann insbesondere die Rutschkupplung bzw. können die Rutschkupplungen für die Festlegung eines maximal übertragbaren Drehmomentes einstellbar sein. Diese vorteilhafte Möglichkeit erlaubt es, ein Drehmoment z.B. nach Vorgaben unterschiedlicher Hersteller der Einbauteile anzupassen oder aber eine Drehmomentbegrenzung anhand der Erfahrungen eines das Werkzeug verwendenden Handwerkers vorzugeben. Dabei kann eine entsprechende Einstellung, wenn sie denn nach Herstellerangaben der Einbauteile erfolgen soll, mit einer Skala versehen sein, die z.B. Klarnamen oder Symbole aufweist, die entsprechende Anbieter der Systeme der Einbauteile symbolisieren, so dass ein Anwender des Werkzeuges das Drehmoment sehr einfach entsprechend den Vorgaben eines bestimmten Herstellers einstellen kann.

Das erfindungsgemäße Werkzeug kann weiterhin mit Vorteil eine Einstelleinrichtung für die Anpassung des Abstandes der Schraubwerkzeugelemente zueinander aufweisen. Eine solche Einstellmöglichkeit erlaubt ebenso die Anpassung des Werkzeuges auf Einbauteile von unterschiedlichen Herstellern. Denn die unterschiedlichen Hersteller der verschiedenen Systeme von Einbauteilen, aber auch unterschiedliche Einbauteile in der Serie eines Herstellers, sind nicht etwa in genormter und einheitlicher Weise mit Schrauben für das Betätigen der Klemmelemente bzw. der Halteklauen zum Verankern des Einbauteils in der Dose versehen, sondern weisen hier individuelle Anordnungen auf, die insbesondere im Abstand der Schraubenköpfe zueinander variieren. Entsprechend kann über eine erfindungsgemäße Einstelleinrichtung auch hier eine Anpassung erfolgen. Auch in der Einstelleinrichtung kann wiederum eine Skala vorgesehen sein, die dem Verwender aufzeigt, welche Einstellung er für welche Hersteller oder für welches Bauteil eines bestimmten Herstellers vornehmen soll. Eine solche Skala und Vorgabe erleichtert den Gebrauch des Werkzeuges.

Anstelle eines Einstellmechanismus kann aber auch vorgesehen sein, dass das Werkzeug mehrere, auswechselbare Werkzeugköpfe aufweist, die z.B. mit der Antriebswelle auswechselbar verbindbar sind und jeweils ein eigenes Getriebe und die Abtriebswellen und Schraubwerkzeugelemente in entsprechender Anordnung angepasst an das jeweilige Einbauteil und die Lage und Position der dortigen Schrauben zum Bedienen der Klemmelemente bzw. Halteklauen aufweisen.

Wenn allerdings, was der Erfinder bevorzugt, eine Einstelleinrichtung für die Anpassung des Abstandes der Schraubwerkzeugelemente zueinander vorgesehen ist, können die Abtriebswellen hierfür insbesondere je ein Kardangelenk aufweisen. Ein solches Kardangelenk erlaubt einen gewissen seitlichen Versatz der Abtriebswellen hinsichtlich ihres Abschnittes auf der einen Seite der Kardanwelle, so dass darüber die Abstandseinstellung ermöglicht wird.

Weiterhin kann das Werkzeug gemäß der Erfindung mit Vorteil an einer Vorderseite, an der die Schraubwerkzeugelemente angeordnet sind, ein an dem Werkzeugkörper angeordnetes Anlageelement zum Anlegen eines in die Unterputz- oder Hohlwanddose einzusetzenden und daran festzulegenden Einbauteils aufweisen. Ein solches Anlageelement dient dafür, das Einbauteil sicher an dem Werkzeug zu positionieren. Es kann dabei insbesondere eine die Bauform und Kontur des Einbauteils auf einer die Schraubköpfe für die Betätigung der Klemmelemente bzw. Halteklauen aufweisenden Vorderseite des Einbauteils komplementär zumindest in weiten Teilen nachbildende Kontur aufweisen, um so einen zumindest in gewisser Weise formschlüssigen Halt des Einbauteils auf dem Anlageelement zu erreichen und dieses z.B. gegen ein seitliches Verrutschen zu sichern. Auf diese Weise kann das Einbauteil auf dem erfindungsgemäßen Werkzeug zunächst einmal grob vorfixiert und mit dem Werkzeug letztlich in der Dose positioniert und dann festgelegt werden. Um das Anlageelement noch besser mit dem Werkzeug zu handhaben, kann es (unabhängig davon, ob es ein Anlageelement aufweist oder nicht, insbesondere aber dann, wenn ein solches vorhanden ist) Haltemittel aufweisen zum Halten eines an dem Anlageelement angelegten Einbauteils. Die Haltemittel können dabei insbesondere wenigstens einen Haltemagneten umfassen. Denn in der Regel weisen die Anbauteile metallische Elemente, typischerweise einen metallenen Anlagekragen oder -flansch auf, der einfach mit dem Haltemagneten fixiert werden kann zum Halten des Einbauteils an dem Werkzeug. Dabei ist die Magnetkraft selbstverständlich in einer solchen Weise bemessen, dass das Einbauteil zwar sicher gehalten, nach der Montage in der Dose allerdings auch einfach wieder gelöst wird. Wenn das erfindungsgemäße Werkzeug ein Anlageelement aufweist, so umfasst dieses mit Vorteil ein an dem Werkzeugkörper lösbar und austauschbar festlegbares Anlageteil. Eine solche Austauschbarkeit erlaubt es, das Werkzeug an verschiedene Einbauteile (Steckdosen, Schalter, TV-Dosen und dergleichen), nicht nur aus einer Serie eines Herstellers, sondern auch der unterschiedlichsten Hersteller, anzupassen, was das Werkzeug universell einsetzbar macht. Dazu kann insbesondere ein Set gebildet sein mit einem Werkzeugkörper und einer Mehrzahl von auswechselbar daran festlegbaren Anlageelementen.

Mit Vorteil kann das Anlageelement weiterhin relativ zu dem Werkzeugkörper in einer im Wesentlichen parallel zu den Rotationsachsen der Schraubwerkzeugelemente verlaufenden Richtung verlagerbar sein. Eine solche Verlagerbarkeit erlaubt es, dass das Anlageelement z.B. ausweicht, wenn mit dem Werkzeug ein Einbauteil an dem Anlageelement und damit an dem Werkzeugkörper festgelegt wird. Eine solche Ausweichbewegung ist insbesondere dann relevant, wenn die Schraubwerkzeugelemente aufgrund der Lage der Schrauben für das Betätigen der Klemmelemente bzw. Halteklauen über eine gewisse Tiefe in das Einbauteil hinein verbracht werden müssen. Da insbesondere häufig während des Einschraubens der Schrauben diese tiefer in das Einbauteil hineinfahren, wird sich das Anlageelement auch während des Betriebes des Werkzeuges häufig relativ zu dem Werkzeugkörper verlagern, um auch während des Montagevorganges einen sicheren Halt des Einbauteils an dem Anlageelement beizubehalten. Mit Vorteil ist bei einer solchen Lösung das Anlageelement durch ein Rückstellelement in einer Ausgangslage in Richtung der freien Enden der Schraubwerkzeugelemente gezwungen, so dass das Anlageelement stets diese Grundstellung einnimmt, aus der es dann entgegen der von dem Rückstellelement aufgebrachten Kraft herausbewegt werden kann.

Es können mit Vorteil bei dem erfindungsgemäßen Werkzeug auch die Schraubwerkzeugelemente in einer solchen Weise in Richtung ihrer Rotationsachsen verlagerbar sein, dass ihre freien Enden ihre jeweilige Position relativ zu dem Werkzeugkörper bei einer solchen Verlagerung verändern. Eine derartige Bewegbarkeit der Schraubelemente stellt insbesondere sicher, dass in einem solchen Fall, in dem die die Klemmelemente bzw. Halteklauen nach außen zwingenden Schrauben unterschiedlich schnell eingeschraubt werden und damit unterschiedliche Tiefenpositionen in dem Einbauteil einnehmen, weiterhin beide Schraubwerkzeugelemente in sicherem Eingriff mit den Schraubenköpfen stehen, um diese solange zu betätigen, bis beide Klemmelemente bzw. Halteklauen mit einem vorgegebenen Andruck gegen die Dosenwand liegen, die zugehörigen Betätigungsschrauben z.B. mit einem vorgegebenen Drehmoment angezogen sind. Auch hier können die Schraubwerkzeugelemente in eine Ausgangsposition gezwungen sein, in denen die freien Enden maximal über den Werkzeugkörper vorstehen, was z.B. durch entsprechend vorgesehene Federelemente geschehen kann.

Um nicht nur Verletzungsgefahren zu vermeiden, sondern die empfindlichen Bauteile der Übertragungsmechanik vor äußeren Einflüssen wie Schmutz und dgl. zu schützen, kann der Werkzeugkörper mit Vorteil ein Gehäuse aufweisen, das wenigstens das Getriebe umschließt.

Da es für die Ausrichtung der Einbauteile häufig auf eine Anordnung nach vertikalen und horizontalen Orientierungslinien ankommt, kann das Werkzeug mit Vorteil wenigstens einen Lageanzeiger aufweisen, der insbesondere in Form einer Libelle gestaltet sein kann. Ein solcher Lageanzeiger hilft vor dem eigentlichen Vorgang des Festlegens bei der korrekten Ausrichtung der Orientierung des Einbauteils, so dass später eine den gewünschten horizontalen und vertikalen Fluchtlinien entsprechender Einbau der fertigen Bauteile, insbesondere der Abdeckteile (insbesondere der Blendrahmen), die auf die Einbauteile aufgesetzt werden, erreicht wird.

Das erfindungsgemäße Werkzeug kann dabei einen eigenen Antriebsmotor aufweisen, der mit der Antriebswelle verbunden ist. Es kann also nach Art z.B. eines Akkuschraubers gebildet sein. Ebenso kann das Werkzeug aber auch als Aufsatz ausgeführt sein, indem die Antriebswelle ein rückwärtiges, freies Ende aufweist, mit dem diese über den Werkzeugkörper vorsteht und welches zum Verbinden mit einer Anschlussmuffe eines motorgetriebenen Bohr- und Schraubgerätes ausgebildet ist. Als solcher Aufsatz kann es z.B. mit einem herkömmlichen Ackuschrauber verbunden und mit einem solchen betrieben eingesetzt werden. Als solcher Aufsatz ist das Werkzeug kostengünstiger herzustellen und kann von einem Handwerker mit einem bei diesem ohnehin vorrätigen angetriebenen Gerät, wie eben einem Akkuschrauber oder einem Akkubohrer, betätigt werden.

Der Erfinder hat sich insbesondere vor dem Hintergrund des Problems der regelmäßig erforderlichen Zentrierung des Einbauteils in der Dose, die insbesondere dann relevant wird, wenn mehrere Dosen nebeneinander angeordnet sind, die Einbauteile einer ganzen Einbauleiste aufnehmen und später von einem einzigen Blendrahmen verdeckt werden sollen, weiterhin Gedanken gemacht, wie diesem Problem begegnet werden kann. Dabei ist er darauf verfallen, hier eine Anreißschablone zu gestalten, die dem Markieren der Einbauposition bzw. Einbaupositionen eines oder mehrerer Anbauteile in Unterputz- oder Hohlwanddosen dienen und die eine Schablonenplatte mit Anreißmarkierungen und wenigstens ein an der Schablonenplatte relativ zu dieser in einer Plattenlängsrichtung verlagerbar festgelegtes, in eine Unterputz- oder Hohlraumdose einführbares und in dieser zentrierend festlegbares Zentrierelement aufweist. Eine solche Anreißschablone kann nun also derart verwendet werden, dass das wenigstens eine Zentrierelement in eine Dose eingesetzt wird. Das Zentrierelemente ist dabei so gestaltet, dass es in zentrierten Position in der jeweiligen Dose angeordnet wird, so dass ein Mittelpunkt der Dose bestimmt wird durch die Positionierung des Zentrierelementes an der Schablonenplatte. Sodann wird die Schablonenplatte durch relatives Bewegen zu dem in der Dose festgelegten Zentrierelement ausgerichtet und kann das Zentrierelement ggf. fixiert werden, so dass die Anreißmarkierungen entsprechend in ihrer Position relativ zu dem Zentrierelement festgelegt sind. So können nun über die Anreißmarkierungen entsprechende Marken auf die Wand aufgebracht werden, in der die Dosen angeordnet sind. Diese Anreißmarkierungen können später für die Ausrichtung der Einbauteile während ihres Einbaus in die Dosen genutzt werden als Positionsorientierungen bzw. Positionierungsmarkierungen. Eine solche Anreißschablone, zu der weitere vorteilhafte Weiterbildungen nachfolgend noch näher beschrieben werden, kann grundsätzlich eigenständig als eigenes Werkzeug verwendet werden und ist vom Erfinder auch dafür vorgesehen. Insbesondere kann diese Anreißschablone aber auch im Set mit dem erfindungsgemäßen Werkzeug verwendet werden, um so die Effizienz des erfindungsgemäßen Werkzeuges noch weiter zu steigern. Es können an der Anreißschablone auch mehrere Zentrierelemente angeordnet sein, die in mehrere Dosen eingebracht und dort zentriert festgelegt werden können. Dies können Zentrierelemente bis zu einer solchen Zahl sein, die der Zahl der Dosen in einer Mehrfachdosenanordnung entspricht.

Gemäß einer Weiterbildung der Anreißschablone und des mit ihr gebildeten Sets kann das wenigstens eine Zentrierelement (können auch mehrere Zentrierelemente) ein im Wesentlichen kugelförmig gebildetes, elastisches, in einer Richtung im Wesentlichen senkrecht zu einer Plattenebene der Schablonenplatte stauchbares Ballonelement aufweisen, das in einem ungestauchten Zustand einen Außendurchmesser aufweisen, der geringer ist als der Innendurchmesser der Unterputz- oder Hohlwanddosen, wobei Stauch- und Arretierungsmittel vorgesehen sind, mittels derer das Ballonelement in der Richtung im Wesentlichen senkrecht zu der Plattenebene in einer solchen Weise gestaucht und in der gestauchten Stellung arretiert werden kann, dass durch eine mit der Stauchung in diese Richtung verbundene Streckung des Ballonelements in einer Richtung im Wesentlichen parallel zu der Plattenebene das Ballonelement in dieser Richtung seinen Durchmesser derart erweitern, dass dieser größer ist als der Innendurchmesser der Unterputz- oder Hohlwanddosen. Eine solche Lösung des Zentrierelements ist einfach umzusetzen und ergibt eine mit einfachen Mitteln erreichte und sehr genaue Zentrierung. Durch das Stauchen wird eine gleichmäßige Festlegung des Zentrierelementes in dem Innenraum der Dose erreicht, die zugleich zu einer sehr genauen Zentrierung des Zentrierelements führt. Die Zentrierung kann hier insbesondere bezogen sein z.B. auf einen mit dem Ballonelement verbundenen, in der Richtung, in der das Stauchen erfolgt, orientierten Haltesteg, der dann das Zentrum der Dose im Hinblick auf eine Projektion auf die Wandebene vorgibt.

Eine Anreißschablone, die insbesondere Bestandteil des erfindungsgemäßen Sets sein kann, kann insbesondere eine Schablonenplatte mit einer Länge aufweisen, die fünf in Längsrichtung der Schablonenplatte hintereinander angeordnete Mehrfachdosen überdeckt, da häufig bis zu fünf hintereinander bzw. übereinander angeordnete Dosen in einer einzigen Leiste, z.B. für eine Steckerleiste, zusammengestellt sind, und später mit einem einzigen Blendrahmen versehen werden müssen. Gerade in einer solchen Anordnung kommt es auf eine sehr exakte Positionierung der einzelnen Einbauteile an, da diese entsprechend die Position der Kunststoffabdeckungen und damit auch des Blendrahmens vorgeben und bei einer nicht exakten Ausrichtung relativ zueinander eine Montage des Blendrahmens erschweren, wenn nicht gar verhindern. Dabei kann die Anreißschablone insbesondere wenigstens zwei Zentrierelemente und eine an einer solchen Position in zwei Teilplatten teilbare Schablonenplatte aufweisen, dass bei Trennung der Schablonenplatte eine erste Teilplatte und eine zweite Teilplatte mit jeweils wenigstens einem daran angeordneten Zentrierelement erhalten werden. Letztlich ist eine solche Anreißschablone also durch zwei miteinander verbindbare Anreißschablonen gebildet, so dass mit dieser Schablone Anordnungen mit nur zwei nebeneinander angeordneten Unterputzdosen ebenso bearbeitet und für eine solche Anordnung Positionierungsmarkierungen angerissen werden können, wie solche mit drei oder vier (dabei zweimaliger Einsatz der Zweierschablone) oder fünf in Reihe zueinander angeordneten Dosen.

Schließlich kann auch die Anreißschablone, wie dies auch bereits für das Werkzeug als vorteilhafte Weiterbildung offenbart ist, wenigstens einen Lageanzeiger aufweisen, der wiederum insbesondere als Libelle ausgeführt sein kann. Selbstverständlich können auch mehrere Lageanzeiger vorhanden sein, was gleichermaßen auch für das Werkzeug gilt, z.B. Lageanzeiger für zwei zueinander senkrechte Richtungen zum Orientieren einer vertikalen und einer horizontalen Ausrichtungslinie.

Bereits aus der vorstehenden Beschreibung dürfte der besondere Vorteil und dürften die besonderen Merkmale der Erfindung deutlich geworden sein. Noch weiter verdeutlicht werden diese und weitere erfindungsgemäße und vorteilhafte Merkmale der Erfindung in der nachfolgenden Beschreibung von Ausführungsbeispielen anhand der beigefügten Figuren. Dabei zeigen:
- Fig. 1: in schematischer Schnittdarstellung eine Aufsicht auf eine Ausführungsform eines erfindungsgemäßen Werkzeuges;
- Fig. 2: in schematischer Schnittdarstellung eine Aufsicht auf das Werkzeug gemäß Fig. 1, jedoch mit in Richtung der Werkzeuglängsachse verlagerter Adapterplatte;
- Fig. 3: in schematischer Schnittdarstellung eine Seitenansicht des Werkzeuges aus Fig. 1;
- Fig. 4: in schematischer Darstellung eine Ansicht des Werkzeuges nach Fig. 1 von der in der Fig. 1 links gezeigten Vorderseite her;
- Fig. 5: in schematischer Darstellung eine Ansicht des Werkzeuges in der in Fig. 4 gezeigten Perspektive, jedoch ohne Adapterplatte;
- Fig. 6a-c: in jeweils einer Ansicht von vorn (links dargestellt) und einer Ansicht von der Seite (rechts dargestellt) unterschiedliche Adapterplatten für das Festlegen von verschiedenen Einbauteilen;
- Fig. 7: in schematischer Darstellung eine Seitenansicht einer Ausführungsform einer neuartigen Anreißschablone, die insbesondere mit einem erfindungsgemäßen Werkzeug im Set verwendet werden kann;
- Fig. 8: in schematischer Darstellung eine Seitenansicht der Anreißschablone aus Fig. 7 mit gestauchtem und damit in einer Dose verklemmten Ballonelement;
- Fig. 9: in schematischer Darstellung eine Aufsicht auf die Anreißschablone nach Fig. 7;
- Fig. 10: in schematischer Darstellung eine Aufsicht auf die in der Fig. 7 dargestellten Anreißschablone von der in der Fig. 7 rechts dargestellten Seite her, jedoch ohne Zentrierelemente;
- Fig. 11: in schematischer Darstellung eine Ansicht der Anreißschablone wie in Fig. 10 mit separierten Schablonenteilen und
- Fig. 12: in schematischer Darstellung eine Ansicht der Vorderseite der Anreißschablone gemäß Fig. 7 mit zwei Ballonelementen.

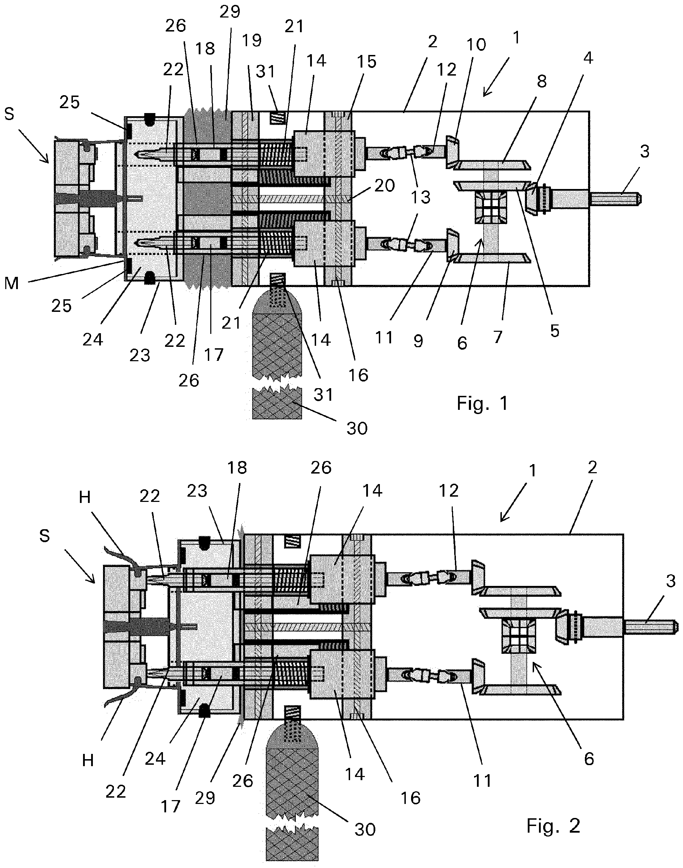

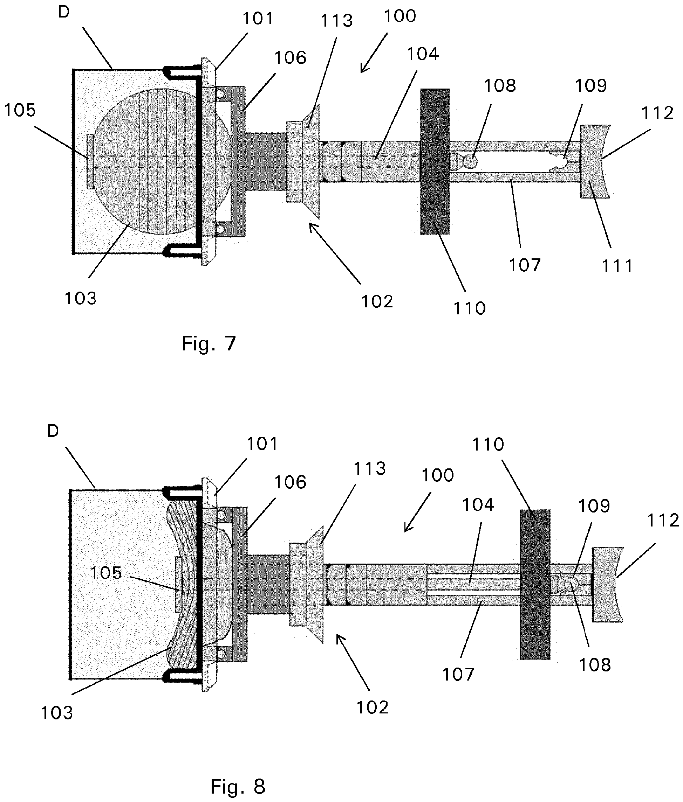

In den Figuren ist zunächst ein Ausführungsbeispiel eines erfindungsgemäßen Werkzeuges in verschiedenen Ansichten (Figuren 1 bis 6) dargestellt. Desweiteren ist eine neuartige und von dem Erfinder entwickelte Anreißschablone in den Figuren 7 bis 12 gezeigt. Diese Anreißschablone kann dabei insbesondere im Set mit einem erfindungsgemäßen Werkzeug, so auch mit einem wie in den Figuren 1 bis 6 gezeigten Ausführungsbeispiel eines solchen Werkzeuges, verwendet werden. Die Figuren sind dabei als schematische Prinzipdarstellungen aufzufassen und stellen insbesondere keine vollständigen Konstruktionszeichnungen dar. Sie sind dabei auch nicht zwingend maßstabsgerecht. In den Figuren werden zur Bezeichnung gleicher Teiler gleiche Bezugszeichen verwendet.

Nachfolgend wird zunächst anhand der Figuren 1 bis 6 das gezeigte Ausführungsbeispiel eines erfindungsgemäßen Werkzeuges zum Festlegen von Einbauteilen in Unterputz- und Hohlwanddosen näher erläutert. Das in den Figuren dargestellte Werkzeug ist allgemein mit der Bezugsziffer 1 bezeichnet. Dieses Werkzeug 1 umfasst zunächst ein Gehäuse 2, in welchem Komponenten des Werkzeuges angeordnet und durch dieses Gehäuse 2 geschützt untergebracht sind. In das Gehäuse 2 hinein führt eine Antriebswelle 3, die mit einem freien Ende über das Gehäuse 2 vorsteht und in einer Werkzeuglängsrichtung orientiert ist. Diese Antriebswelle 3 ist für die Verbindung mit einem motorischen Antrieb vorgesehen, über den ein Drehmoment auf die Antriebswelle 3 aufgebracht wird. Ein solcher motorischer Antrieb kann (hier nicht gezeigt) in dem Werkzeug 1 integriert sein. Die Antriebswelle 3 kann aber auch mit einem motorbetriebenen Werkzeug, wie z.B. einem elektrischen Bohrer oder einem elektrisch angetriebenen Schraubwerkzeug, insbesondere derartigen Akkugeräten, gekoppelt werden. Hierzu wird die Antriebswelle 3 mit ihrem freien und über das Gehäuse 2 überstehenden Ende mit einem Spannfutter eines solchen Gerätes verbunden, so dass das motorbetriebene Werkzeug als Antrieb für das Werkzeug 1 dient.

An einem dem freien und über das Gehäuse 2 überstehenden Ende gegenüberliegenden Ende ist die Antriebswelle 3 mit einem Kegelrad 4 versehen, welches ein auf die Antriebswelle 3 aufgebrachtes Drehmoment auf ein Kegelrad 5 eines Ausgleichsgetriebes (Differenzialgetriebes) 6 überträgt.

Das Ausgleichsgetriebe 6 weist zwei Ausgangskegelräder 7, 8 auf, die jeweils mit einem Kegelrad 9, 10 kämmen. Die Kegelräder 9, 10 sind mit jeweils einer Abtriebswelle 11, 12 verbunden. Diese Abtriebswellen 11, 12 führen weiter über je ein Kardangelenk 13 zu je einem Drehmomentbegrenzer 14. Die Drehmomentbegrenzer 14 sind dabei auf einer Gleitschiene 15 gelagert, über die mittels eines Spindelantriebes 16 der Abstand der Drehmomentbegrenzer 14 in einer Richtung senkrecht zur Werkzeuglängsrichtung eingestellt werden kann. Diese Abstandsverstellung ist dabei möglich, da über die Kardangelenke 13 ein seitlicher Versatz der Abtriebswellen 11, 12 erhalten werden kann.

Auf der den Abtriebswellen 11, 12 antriebsseitig gegenüberliegenden Seite sind die Drehmomentbegrenzer 14 mit Bithaltern 17, 18 verbunden und übertragen das Drehmoment weiter auf diese. Die Bithalter 17, 18 sind dabei über eine weitere Gleitschiene 19 für eine Abstandsverstellung mittels des Spindelantriebes 16 geführt, wobei der Spindelantrieb 16 eine entsprechende Übertragungsspindel 20 aufweist, mit der der Antrieb zum Verstellen des Abstandes auch auf die Bithalter 18 in der Gleitschiene 19 übertragen wird. Die Bithalter 17, 18 sind dabei in Werkzeuglängsrichtung verlagerbar und durch jeweils eine Druckfeder 21 in eine der Lage der Antriebswelle 3 entgegengesetzte, in Werkzeuglängsrichtung weisende Vorderseite vorgespannt. In den Bithaltern 17, 18 sind austauschbare Schraubbits 22 eingesetzt.

Auf der Vorderseite des Werkzeuges 1, an der die Schraubbits 22 in den Bithaltern 17, 18 angeordnet sind, ist ein Anlageteil in Form einer Adapterplattenhalterung 23 mit darin auswechselbar eingesetzter Adapterplatte 24 angeordnet. Die Adapterplattenhalterung 23 hat vorzugsweise in Aufsicht von der vorderen Stirnseite des Werkzeuges 1 her die exakten Außenmaße der (metallenen) Montageplatten der Einbauteile. Nach europäischem Standard sind dies die Maße 71mm x 71mm. Die Adapterplatte 24weist auf ihrer Vorderseite Haltemagnete 25 auf, bei denen es sich z.B. um Neodym-Magnete handeln kann. Die Adapterplatte 24 ist dabei auf ihrer Vorderseite entsprechend der Formgebung eines Einbauteils auf einer an der Vorderseite festzulegenden Anlageseite geformt, so dass die Adapterplatte mit diesem Einbauteil zusammen eine stabile Anlageverbindung eingehen kann. In der Darstellung des Werkzeuges 1 gemäß Figuren 1 und 2 ist als Beispiel eines Einbauteils ein Steckdoseneinsatz S dargestellt, der auf der Vorderseite der Adapterplatte 24 festgelegt und dort an seinem Metallrand M mittels der Haltemagnete 25 gehalten ist.

Weiterhin zu erkennen ist, dass das Anlageteil, welches durch die Adapterplattenhalterung 23 und die Adapterplatte 24 gebildet ist, in Längsrichtung des Werkzeuges 1 verlagerbar an dem Gehäuse 2 gelagert ist. Hierzu ist die Adapterplattenhalterung 23 über Gleitbolzen 26 mit dem Gehäuse 2 verbunden, welche Gleitbolzen 26 in elektrisch isolierenden Gleitbolzenbuchsen 27 geführt und durch in den Gleitbolzenbuchsen 27 gelagerte Druckfedern 28 federbelastet und in eine in Richtung der Vorderseite des Werkzeuges 1 weisende Normalstellung gezwungen sind.

Schließlich ist zu erkennen, dass an dem Gehäuse 2 ein Griff 30 festgelegt ist. Dieser Griff 30 ist mittels einer Schraubverbindung mit dem Gehäuse 2 verbunden und kann in verschiedene, an dem Gehäuse 2 an unterschiedlichen Positionen angeordnete Schraubbuchsen 31 eingeschraubt und somit an unterschiedlichen Stellen des Gehäuses 2 festgelegt werden, um hier einen flexiblen Einsatz des Werkzeuges 1 für unterschiedliche Einbaulagen oder auch für Bediener mit unterschiedlicher Händigkeit (Rechtshänder, Linkshänder) zu ermöglichen.

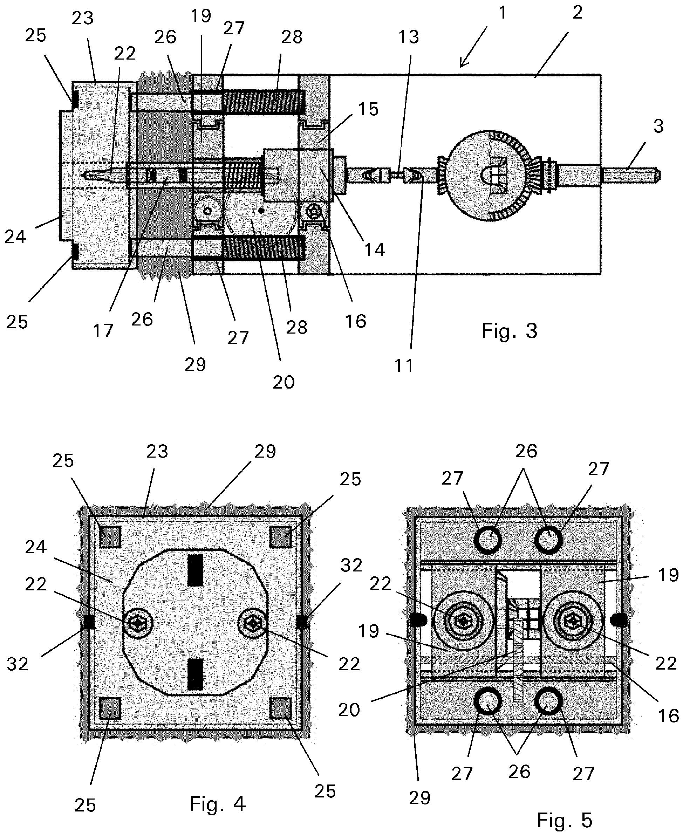

In Fig. 4 ist zudem zu erkennen, dass über Rastvorrichtungen 32 die austauschbare Adapterplatte 24 in der Adapterplattenhalterung 23 festgelegt werden kann.

Ein Vergleich der Figuren 1 und 2 veranschaulicht die Funktion des erfindungsgemäßen Werkzeuges 1. Für dessen Gebrauch wird zunächst das Einbauteil, hier der Steckdoseneinsatz S auf der Vorderseite des für diesen spezifischen Steckdoseneinsatz S eines Herstellers und der zugehörigen Serie festgelegt und mit den Haltemagneten 25 fixiert. Nun wird der Steckdoseneinsatz S mittels des Werkzeuges 1 in eine Dose, insbesondere eine Unterputzdose oder eine Hohlwanddose, eingesetzt. Dann wird, wenn der Steckdoseneinsatz S dort richtig positioniert ist, das Werkzeug 1 betrieben, indem auf die Antriebswelle 3 ein Drehmoment aufgebracht wird. Dieses Drehmoment wird über das Ausgleichsgetriebe 6 auf die Abtriebswellen 11, 12 übertragen, durch die Drehmomentbegrenzer 14, die insbesondere hinsichtlich ihres Maximaldrehmomentes einstellbar sein können, begrenzt und mit gleichem Drehsinn auf die Bithalter 17, 18 und von diesen auf die darin eingesetzten Schraubbits 22 übertragen. Das Werkzeug wird nun von der Rückseite, an der die Antriebswelle 3 übersteht, mit einem gewissen Druck beaufschlagt, so dass das Gehäuse 2 gegen die Andruckplattenhalterung 23 gepresst wird. Dadurch geraten die Schraubbits 22 mit den Schrauben zum Betätigen der zum Verankern des Steckdoseneinsatzes S in der Dose vorgesehenen Halteklauen H (vgl. Fig. 2) in Eingriff und ziehen diese Schrauben an, um so die Halteklauen H abzuspreizen und den Steckdoseneinsatz S in der Dose zu verankern. Der entsprechende Abstand der Bithalter 17, 18 und damit der Schraubbits 22 zueinander wurde zuvor über den Spindelantrieb 16 derart eingestellt, dass er an den Abstand der Schrauben zum Ausstellen der Halteklauen H in dem verwendeten Steckdoseneinsatz S angepasst ist. Während dieses Montagevorganges bewegt sich der Adapterplattenhalter 23 mit der darin eingesetzten Adapterplatte 24 relativ zu dem Gehäuse 2 in Richtung der rückwärtigen Endes des Werkzeuges 1, an dem die Antriebswelle 3 das Gehäuse 2 durchbricht, wobei die Gleitbolzen 26 in die Gleitbolzenbuchsen 27 eintauchen und die Druckfedern 28 spannen. Dabei wird der Faltenbalg 29 zusammengefaltet. Mit dem erfindungsgemäßen Werkzeug können also beide für das Ausstellen der Halteklauen H verantwortlichen Schrauben in dem Steckdoseneinsatz S simultan angezogen werden, so dass eine symmetrische Festlegung und ein gleichzeitiges Ausstellen der Halteklauen H erreicht wird. Zudem wird auch erzielt, dass die Schrauben, die die Halteklauen H ausstellen, nur mit einem maximal zulässigen Drehmoment angezogen werden, was durch die Drehmomentbegrenzer 14 erreicht wird, bei denen es sich z.B. um Rutschkupplungen handeln kann. Das Ausgleichsgetriebe 6 sorgt dabei dafür, dass für den Fall, dass die Schrauben unterschiedlich fest angezogen sind, auch bei einem stehenden Bithalter der zweite Bithalter weiterhin mit einem Drehmoment beaufschlagt wird, die diesem zugeordnete Schraube weiterhin angezogen und die zugehörige Halteklaue weiter ausgestellt werden kann. Sollten dabei die Schrauben ungleich tief in das Einbauteil (hier den Steckdoseneinsatz S) eingetaucht sein, so kann aufgrund der in ihrer Längsrichtung bewegbar und federnd gelagerten Bithalter 17, 18 auch ein solcher Höhenunterschied ausgeglichen werden.

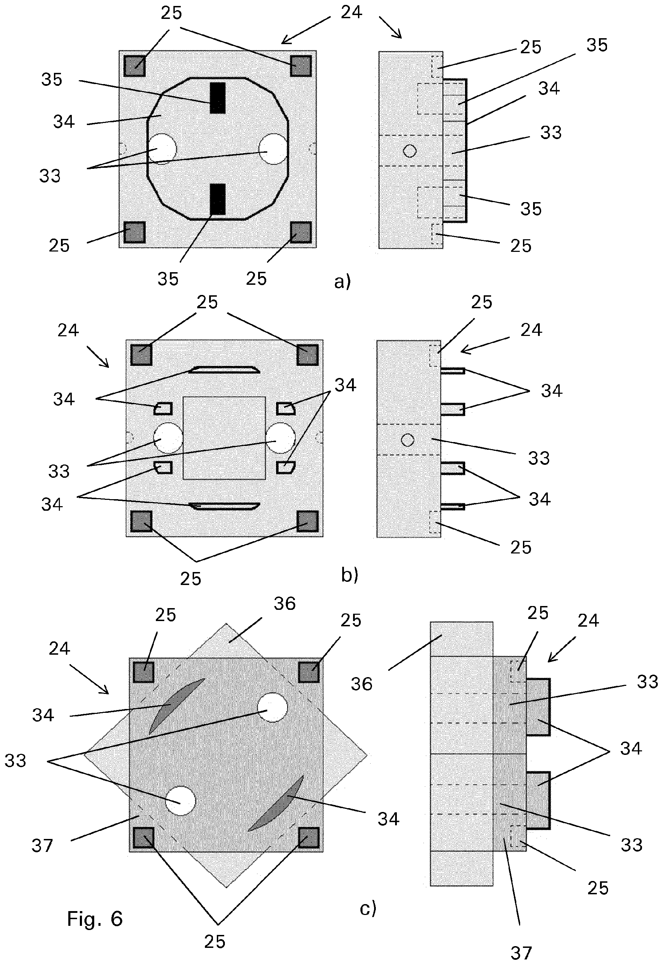

In Figuren 6a bis 6c sind - in jeweils zwei Ansichten, einer Frontansicht (jeweils links dargestellt) und einer Ansicht von der Seite (rechts dargestellt) - verschiedene Adapterplatten 24 gezeigt, die für unterschiedliche Einbauteile vorgesehen sind. Die in Fig. 6a gezeigte Adapterplatte 24 ist für das Festlegen eines Steckdoseneinsatzes gebildet. Die in Fig. 6b gezeigte Adapterplatte 24 ist für das Festlegen eines Schalters gebildet. Die in Fig. 6c gezeigte Adapterplatte ist für das Festlegen eines TV-Signal-Einsatzes geformt.

Alle Adapterplatten 24, die in Fig. 6 gezeigt sind, haben Öffnungen 33, durch die hindurch die Bithalter mit den eingesetzten Schraubbits ragen, wenn die jeweilige Adapterplatte 24 an dem Adapterplattenhalter des Werkzeuges 1 festgelegt ist. Weiterhin haben alle Adapterplatten 24 Haltemagnete 25, mit denen die an diesen festzulegenden Einsätzen an der jeweiligen Adapterplatte 24 gehalten werden.

An den Adapterplatten 24 sind jeweils unterschiedlich geformte Vorsprünge 34 gestaltet, die in entsprechende Öffnungen der Einbauteile hineinragen, dort im Wesentlichen formschlüssig eingreifen. Damit wird ein zentriertes Ausrichten des an der jeweiligen Adapterplatte 24 festgelegten Einbauteils erzielt. Zusätzlich sind an der Adapterplatte 24 zum Festlegen eines Steckdoseneinsatzes (Fig. 6A) Aufnahmen 35 vorgesehen, in die die Erdungskontakte des Steckdoseneinsatzes hineinragen, wenn letzterer an der Adapterplatte 24 festgelegt ist.

Das Besondere an der Adapterplatte 24 in Fig. 6c ist, dass dieser aus zwei Elementen 36 und 37 gebildet ist. Das Element 36 bildet dabei die Anschlussstruktur an die Adapterplattenhalterung an dem Werkzeug; das Element 37 bildet die eigentlich Basis zum Festlegen des Einbauteils, hier eines TV-Signal-Doseneinsatzes. Dabei sind die beiden Elemente 36 und 37 um eine Winkel von 45° relativ zueinander verdreht orientiert. Dadurch wird erreicht, dass die Öffnungen 35, durch die die Schraubbits hindurch ragen beim Montieren des Einsatzes in einer entsprechenden Orientierung von 45° zu der Horizontalen geneigten Linie orientiert werden können. Dies ist erforderlich, da bei den bekannten TV-Signal-Doseneinsätzen die Schrauben für das Festlegen in einer Unterputz- oder Hohlwanddose in einer entsprechenden Orientierung angeordnet sind.

Es ist offensichtlich, dass mit dem erfindungsgemäßen Werkzeug eine große Erleichterung bei der Montage von Einbauteilen in Dosen, wie Unterputz- oder Hohlwanddosen erzielt werden kann. So wird bereits die Positionierung des Einbauteils in der Dose dadurch erheblich vereinfacht, dass das Einbauteil, z.B. der in dem Ausführungsbeispiel gezeigte Steckdoseneinsatz, an der Vorderseite des Werkzeuges 1 positionsgetreu gehalten ist und mit dem Werkzeug in dieser gehaltenen Position in der Dose positioniert werden kann. Ein Installateur muss also nicht mehr mit einer Hand umständlich das Einbauteil in der entsprechenden Dose halten und fixieren und mit der anderen abwechselnd die zum Festlegen zu betätigenden Schrauben bedienen, sondern kann in einem Arbeitsgang das Einbauteil positionieren und in Position halten und zugleich die beiden Schrauben zum Ausstellen der Halteklauen H gleichzeitig anziehen. So reduziert sich die für das Festlegen des Einbauteils in der Dose erforderliche Arbeitszeit erheblich und wird die Bequemlichkeit dieses Arbeitsganges deutlich erhöht.

Nachfolgend wird nun eine Anreißschablone beschrieben, die mit der Erfindung ebenfalls erstmalig angegeben wird und die insbesondere im Set mit einem erfindungsgemäßen Werkzeug, insbesondere einem solchen, wie vorstehend anhand der Figuren 1 bis 6 beschrieben, verwendet werden kann. Eine solche Anreißschablone ist in den Figuren 7 bis 12 dargestellt und allgemein mit der Bezugsziffer 100 gekennzeichnet. An der Schablonenplatte 101 ist wenigstens ein in Längsrichtung der Schablonenplatte 101 verlagerbar festlegbares Zentrierelement 102 angeordnet. Das Zentrierelement 102 weist als wesentlichen Bestandteil ein aus einem elastisch flexiblen Material, z.B. einem Gummi, gebildetes Ballonelement 103 auf. Dieses Ballonelement ist mit einer Zugstange 104 gekoppelt, die über eine Ankerplatte 105 an einem vorderen Ende des Ballonelementes 103 fixiert ist. Die Zugstange 104 verläuft in einer mit einem Haltegestell 106 verbundenen Stangenführung 107 und weist an einem dem Ballonelement 103 gegenüberliegenden freien Ende ein Rastelement auf, welches in diesem Ausführungsbeispiel als Rastkugel 108 gebildet ist, jedoch auch andere Formen einnehmen kann. Das Rastelement in Form der Rastkugel 108 kann in einer Rastaufnahme 109 an einem dem Ballonelement 103 gegenüberliegenden Ende der Stangenführung 107 aufgenommen und dort festgelegt und verrastet werden.

Eine Zugplatte 110 ist mit der Zugstange 104 verbunden und durchragt die Stangenführung 107 durch seitliche Schlitze. An dem dem Ballonelement 103 gegenüberliegenden Ende weist die Stangenführung 107 ein Druckstück 111 auf, welches mit einer Daumenmulde 112 versehen ist. Ein weiteres Griffstück 113 ist an dem Haltegestell 106 angeordnet. Wie Fig. 8 zeigt, kann durch Ziehen an der Griffplatte 110 die Zugstange 104 in Richtung des rückwärtigen, dem Ballonelement 103 gegenüberliegenden Endes der Stangenführung 107 gezogen werden, wobei die Rastkugel 108 in der Rastaufnahme 109 verrastet. Mit einem auf die Daumenmulde 112 des Druckstücks 111 aufgelegten Daumen wird eine Gegenkraft gehalten. Durch das Ziehen der Zugstange 104 wird das Ballonelement 103 in der durch die Verlaufsrichtung der Zugstange 104 vorgegebenen Längsrichtung gestaucht, dehnt sich zugleich in einer Richtung quer dazu aus und verklemmt sich so in der Dose D. Dieses Verklemmen erfolgt aufgrund der symmetrischen Ausdehnung des Ballonelementes 103 in einer solchen Weise, dass die Zugstange 104 relativ zu der im Querschnitt kreisförmigen Dose D zentriert angeordnet ist. Um hier auch ggf. tiefer in der Wand montierte Dosen D sicher zu erreichen und die Zentrierung vornehmen zu können, kann die Stangenführung 107 und mit ihr die Zugstange 104 in ihrer Lage relativ zu der Schablonenplatte 101 verstellbar gestaltet sein.

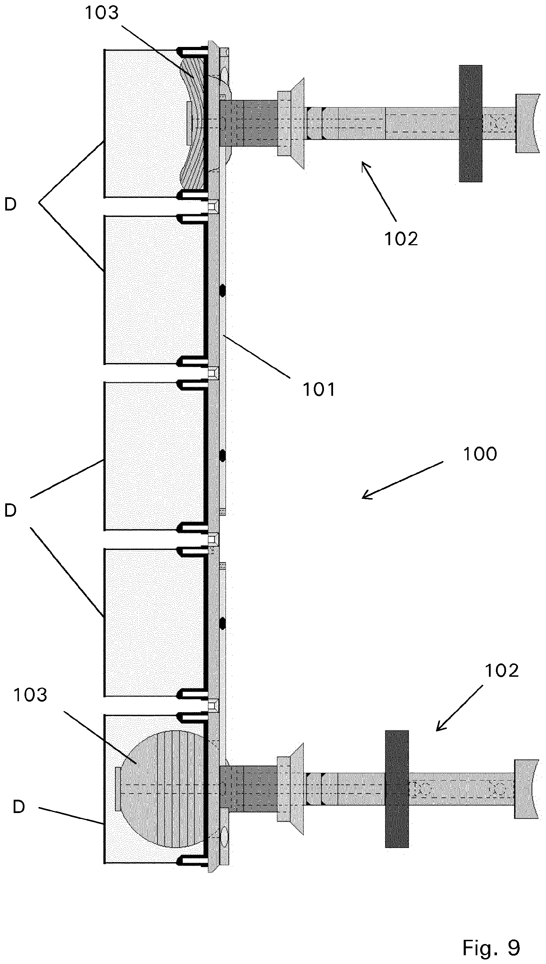

Fig. 9 zeigt nun eine Anreißschablone 100 in der beschriebenen Ausgestaltung in einer Aufsicht. Zu erkennen ist hier, dass diese Anreißschablone eine Schablonenplatte 101 aufweist, die zum Abdecken von insgesamt fünf aneinander gereihten Dosen D ausgebildet ist. In der Standardanordnung nach Norm entspricht dies einem Maß von 71mm x 355mm. An der hier gezeigten Anreißschablone sind zwei Zentrierelemente 102 angeordnet dargestellt, von denen eines mit einem Ballonelement 103 in entspannter Position und ein weiteres mit einem Ballonelement 103 in gestauchter Position dargestellt ist. Wie schon die Figuren 7 und 8 zeigt auch die Fig. 9, dass der Durchmesser des Ballonelementes 103 so gewählt ist, dass dieses im entspannten Zustand in die Dose D hineingeführt werden kann, dass also der Durchmesser des Ballonelementes 103 kleiner ist als der Innendurchmesser der Dose D, dass aber beim Stauchen des Ballonelementes 103 durch Betätigen der Zugstange 104 dessen Durchmesser durch eine Aufweitung in dieser Richtung ansteigt und dabei den Durchmesser der Dose D auf deren Innenseite übersteigt, so dass das Ballonelement 103 in der Dose D festgeklemmt wird und dabei die Zugstange 104 zentriert.

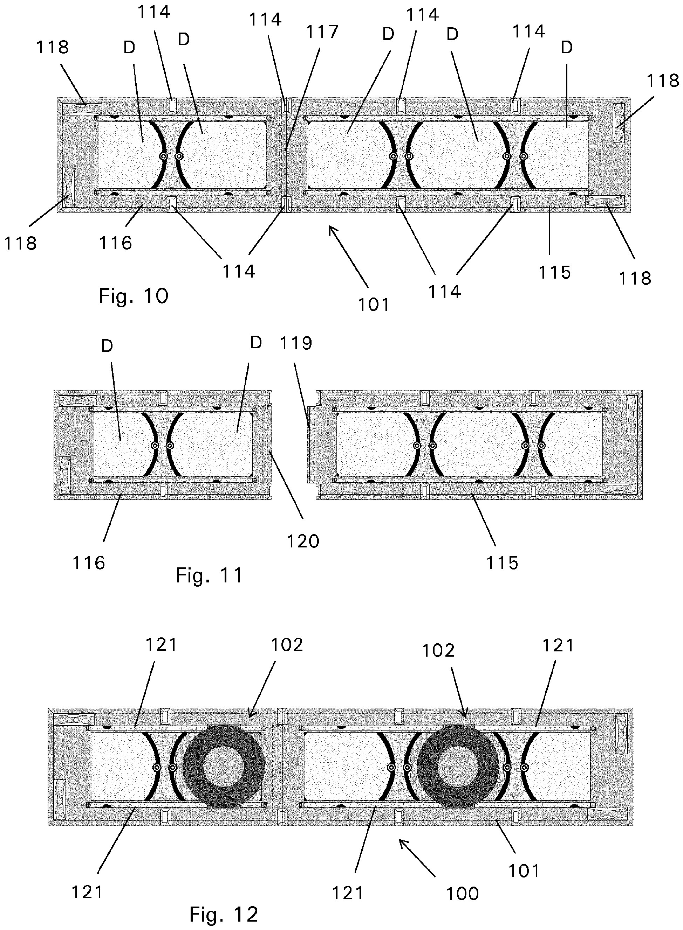

Die Figuren 10 bis 12 zeigen eine Aufsicht auf die Anreißschablone 100, wobei in den Figuren 10 und 11 lediglich die Schablonenplatte 102 dargestellt ist und durch diese hindurch eine Anordnung aus mehreren, nämlich fünf Dosen sichtbar gemacht ist.

Zu erkennen sind die an der Schablonenplatte 101 angebrachten Anreißmarkierungen 114, die z.B. als Schlitze in der Schablonenplatte 101 ausgebildet sein können, durch die hindurch mit einem Stift entsprechende Markierungsstriche an dem Untergrund, insbesondere einer Wand, in der die Dosen D angeordnet sind, angebracht werden können. Die mit der Anreißschablone 100 unter Verwendung der Anreißmarken 114 in der Schablonenplatte 101 ausgebrachten Markierungen dienen dann später zum korrekten Ausrichten der Einbauteile beim Einsetzen in die Dosen D, insbesondere mittels des erfindungsgemäßen Werkzeuges, weshalb sich die Anreißschablone 100 besonders als Zubehörteil und Bestandteil eines Sets zusammen mit dem erfindungsgemäßen Werkzeug eignet. Allerdings kann die Anreißschablone 100 auch eigenständig verwendet werden. Als weitere Anreißmarkierungen können die Außenkanten der Schablonenplatte 101 verwendet werden.

In den Figuren 10 und 11 ist dargestellt, dass die Anreißschablone 100 eine teilbare Schablonenplatte 101 aufweisen kann, die in zwei Teile 115 und 116 unterteilt ist, die entlang einer Trennlinie 117 aus der in Fig. 10 gezeigten zusammengefügten Stellung in zwei Einzelteile zerlegt werden kann, wie dies Fig. 11 zeigt. In Fig. 11 ist dargestellt, dass das Teil 115 für eine Abdeckung von drei Dosen D, das Teil 116 für eine Abdeckung von zwei Dosen D gestaltet ist. So kann die hier beschriebene, neuartige Anreißschablone 100 auch für Zweier- und Dreierkombinationen von Unterputzdosen zum Aufbringen entsprechender Markierungen für das Einbringen von Einbauteilen Verwendung finden. An der Schablonenplatte 101 sind, wie in Fig. 10 gezeigt und auch in den weiteren Figuren zu erkennen, Wasserwaagen 118 angeordnet, um darüber eine waagerechte und auch eine lotrechte Ausrichtung der Schablonenplatte 101 und damit der Anreißschablone 100 vornehmen zu können. Die beiden Teile 115, 116 können dabei über eine Rastverbindung mittels einer Hakenleiste 119 und einer Einhakstruktur 120 verrastend miteinander verbunden und auch wieder voneinander gelöst werden. Dabei verläuft die Trennlinie 117, entlang derer die Trennung und auch die Verbindung der beiden Teile 115, 116 erfolgt, genau durch eine der Anreißmarkierungen 114.

Fig. 12 zeigt schließlich eine Aufsicht auf die Anreißschablone mit zwei daran angeordneten Zentrierelementen 102, wobei hier in Längsrichtung der Schablonenplatte 101 verlaufende Schienen 121 erkennbar sind, entlang derer die beiden Zentrierelemente 102 verschoben werden können, um so eine Ausrichtung der Schablonenplatte 101 und mit dieser der Anreißmarkierungen 114 in Bezug auf zentriert in den Dosen positionierte Zentrierelemente 102 vornehmen zu können.

Mit der Anreißschablone 100 kann auf einfache und zuverlässige Weise die Positionierung der Einbauteile, die in die Dosen D einzubringen sind, geplant werden, so dass ein später auf die Einbauteile aufzubringender Blendrahmen zuverlässig über alle Einbauteile passt und zudem in Waage angebracht ist. Auch diese Anreißschablone 100 bringt eine weitere Arbeitserleichterung mit sich und kann, wie bereits erwähnt, insbesondere in einem Set mit dem erfindungsgemäßen Werkzeug, aber auch isoliert von dem Werkzeug, verwendet werden.

Die vorstehende Beschreibung der Ausführungsbeispiele stellt lediglich eine mögliche, von dem Erfinder bevorzugte Ausführungsform dar, ohne jedoch weitere mögliche Ausgestaltungsvarianten der Erfindung, die gleichermaßen erdacht und umgesetzt werden können, auszuschließen. Die Erfindung wird in ihrer weiten Tragweite allein durch die nachfolgenden Ansprüche definiert.

### Bezugszeichenliste

- 1: Werkzeug
- 2: Gehäuse
- 3: Antriebswelle
- 4: Kegelrad
- 5: Kegelrad
- 6: Ausgleichsgetriebe (Differential)
- 7: Ausgangskegelrad
- 8: Ausgangskegelrad
- 9: Kegelrad
- 10: Kegelrad
- 11: Abtriebswelle
- 12: Abtriebswelle
- 13: Kardangelenk
- 14: Drehmomentbegrenzer
- 15: Gleitschiene
- 16: Spindelantrieb
- 17: Bithalter
- 18: Bithalter
- 19: Gleitschiene
- 20: Übertragungsspindel
- 21: Feder
- 22: Schraubbit
- 23: Adapterplattenhalterung
- 24: Adapterplatte
- 25: Haltemagnet
- 26: Gleitbolzen
- 27: Gleitbolzenbuchse
- 28: Druckfeder
- 29: Faltenbalg
- 30: Griff
- 31: Schraubbuchse
- 32: Rastvorrichtungen
- 33: Öffnung
- 34: Vorsprung
- 35: Aufnahme
- 36: Element
- 37: Element
- 100: Anreißschablone
- 101: Schablonenplatte
- 102: Zentrierelement
- 103: Ballonelement
- 104: Zugstange
- 105: Ankerplatte
- 106: Haltegestell
- 107: Stangenführung
- 108: Rastkugel
- 109: Rastaufnahme
- 110: Zugplatte
- 111: Druckstück
- 112: Daumenmulde
- 113: Griffstück
- 114: Anreißmarke
- 115: Teil
- 116: Teil
- 117: Trennlinie
- 118: Wasserwaage
- 119: Hakenleiste
- 120: Einhakstruktur
- 121: Schiene

- D: Dose (Unterputz- oder Hohlwanddose)
- H: Halteklaue
- M: Metallrand
- S: Steckdoseneinsatz

## Patentansprüche

1. Werkzeug (1) zum Festlegen von Einbauteilen, wie Steckdosen (S), Schaltern oder Dimmern, in Unterputz- oder Hohlwanddosen (D) mit:
• einem Werkzeugkörper,
• einer an dem Werkzeugkörper angeordneten, mit einem Antriebsdrehmoment beaufschlagbaren Antriebswelle (3),
• zwei jeweils eine Rotationsachse aufweisenden und mit den Rotationsachsen parallel zueinander orientierten und unter Belassung eines Abstandes zueinander an dem Werkzeugkörper angeordneten und jeweils mit einer Abtriebswelle (11, 12) verbundenen, jeweils ein von dem Werkzeugkörper vorstehendes freies Ende aufweisenden Schraubwerkzeugelementen (17, 18, 22), und
• einem die Antriebswelle (3) mit den Abtriebswellen (11, 12) verbindenden, an dem Werkzeugkörper angeordneten Getriebe (6), das die Antriebswelle (3) mit den Abtriebswellen (11, 12) in einer solchen Weise koppelt, dass ein an der Antriebswelle (3) anliegendes Drehmoment auf die Abtriebswellen (11, 12) zum gleichsinnig rotierenden Antreiben derselben und darüber zum gleichsinnigen Rotieren der mit den Abtriebswellen (11, 12) verbundenen Schraubwerkzeugelemente (17, 18, 22) um deren jeweilige Rotationsachse übertragen wird,
**dadurch gekennzeichnet, dass**
das Getriebe (6) ein Ausgleichsgetriebe umfasst.

2. Werkzeug (1) nach Anspruch 1, **dadurch gekennzeichnet, dass** es ein Getriebe umfasst, welches so eingerichtet ist, dass eine Umschaltmöglichkeit des Drehsinns der Abtriebswellen vorgesehen ist, wobei insbesondere diese Umschaltmöglichkeit so gebildet ist, dass unterschiedliche Maximaldrehmomente in Einschraub- und Löserichtung vorhanden sind.

3. Werkzeug (1) nach einem der vorhergehenden Ansprüche, **dadurch gekennzeichnet, dass** es wenigstens eine mit der Antriebswelle (3) oder wenigstens einer der Abtriebswellen (11, 12) verbundene Rutschkupplung (14) zur Begrenzung eines übertragenen Drehmoments aufweist.

4. Werkzeug (1) nach Anspruch 3, **dadurch gekennzeichnet, dass** jede der Abtriebswellen (11, 12) über je eine Rutschkupplung (14) an das Getriebe (6) angebunden ist.

5. Werkzeug (1) nach einem der Ansprüche 3 oder 4, **dadurch gekennzeichnet, dass** die Rutschkupplung(en) (14) zur Festlegung eines maximal übertragbaren Drehmoments einstellbar ist/sind.

6. Werkzeug (1) nach einem der vorhergehenden Ansprüche, **dadurch gekennzeichnet, dass** eine Einstelleinrichtung (15, 16, 19) für die Anpassung des Abstandes der Schraubwerkzeugelemente (17, 18, 22) zueinander vorgesehen ist, wobei die Abtriebswellen (11, 12) je ein Kardangelenk (13) aufweisen.

7. Werkzeug (1) nach einem der vorhergehenden Ansprüche, **dadurch gekennzeichnet, dass** es an einer Vorderseite, an der die Schraubwerkzeugelemente (17, 18, 22) angeordnet sind, ein an dem Werkzeugkörper angeordnetes Anlageelement (23, 24) zum Anlegen eines in die Unterputz- oder Hohlwanddose (D) einzusetzenden und darin festzulegenden Einbauteils (S) aufweist.

8. Werkzeug (1) nach Anspruch 8, **dadurch gekennzeichnet, dass** es Haltemittel (25), insbesondere wenigstens einen Haltemagneten, zum Halten eines an dem Anlageelement (23, 24) angelegten Einbauteils (S) aufweist.

9. Werkzeug (1) nach einem der Ansprüche 7 oder 8, **dadurch gekennzeichnet, dass** das Anlageelement (23, 24) ein an dem Werkzeugkörper lösbar und austauschbar festlegbares Anlageteil (24) aufweist, wobei insbesondere mehrerer unterschiedlich geformte Anlageelemente (23, 24) zum austauschbaren Festlegen an dem Werkzeugkörper vorgesehen sind.

10. Werkzeug (1) nach einem der Ansprüche 7 bis 9, **dadurch gekennzeichnet, dass** das Anlageelement (23, 24) relativ zu dem Werkzeugkörper in einer im Wesentlichen parallel zu den Rotationsachsen der Schraubwerkzeugelemente (17, 18, 22) verlaufenden Richtung verlagerbar ist, wobei insbesondere ein Rückstellelement (29) vorgesehen ist, das das Anlageelement (23, 24) in eine Ausgangslage in Richtung der freien Enden der Schraubwerkzeugelemente (17, 18, 22) zwingt.

11. Werkzeug (1) nach einem der vorhergehenden Ansprüche, **dadurch gekennzeichnet, dass** die Schraubwerkzeugelemente (17, 18, 22) in einer solchen Weise in Richtung ihrer Rotationsachsen verlagerbar sind, dass ihre freien Enden ihre jeweilige Position relativ zu dem Werkzeugkörper bei einer solchen Verlagerung verändern, wobei insbesondere Federelemente (21) vorgesehen sind, die die Schraubwerkzeugelemente (17, 18, 22) in eine Ausgangsposition zwingen, in denen die freien Enden maximal über den Werkzeugkörper vorstehen.

12. Werkzeug (1) nach einem der vorhergehenden Ansprüche, **dadurch gekennzeichnet, dass** die Schraubwerkzeugelemente (17, 18, 22) Bithalter (17, 18) und in diese wechselbar einsetzbare Schraubbits (22) umfassen.

13. Werkzeug (1) nach einem der vorhergehenden Ansprüche, **dadurch gekennzeichnet, dass** es wenigstens einen Lageanzeiger, insbesondere eine Libelle, aufweist.

14. Werkzeug (1) nach einem der vorhergehenden Ansprüche, **dadurch gekennzeichnet, dass** es eine mit der Antriebswelle (3) verbundenen Antriebsmotor umfasst.

15. Werkzeug (1) nach einem der Ansprüche 1 bis 13, **dadurch gekennzeichnet, dass** die Antriebswelle (3) mit einem rückwärtigen, freien Ende über den Werkzeugkörper vorsteht und an dem rückwärtigen freien Ende eine Anschlussstruktur aufweist zum Verbinden mit einer Klemmmuffe eines motorgetriebenen Bohr- oder Schraubgerätes.

16. Set, bestehend aus einem Werkzeug (1) nach einem der vorhergehenden Ansprüche und einer Anreißschablone (100) zum Markieren der Einbauposition(en) eines oder mehrerer Anbauteile (S) in Unterputz- oder Hohlwanddosen (D), wobei die Anreißschablone (100) eine Schablonenplatte (101) mit Anreißmarkierungen (114) und wenigstens ein an der Schablonenplatte (101) relativ zu dieser in einer Plattenlängsrichtung verlagerbar festgelegtes, in eine Unterputz- oder Hohlraumdose (D) einführbares und in dieser zentrierend festlegbares Zentrierelement (102) aufweist.

17. Set nach Anspruch 16, **dadurch gekennzeichnet, dass** das Zentrierelement (102) ein im Wesentlichen kugelförmig gebildetes, elastisches, in einer Richtung im Wesentlichen senkrecht zu einer Plattenebene der Schablonenplatte (101) stauchbares Ballonelement (103) aufweist, das in einem ungestauchten Zustand einen Außendurchmesser aufweist, der geringer ist als der Innendurchmesser der Unterputz- oder Hohlwanddosen (D), wobei Stauch- und Arretierungsmittel (104, 108, 109) vorgesehen sind, mittels derer das Ballonelement (103) in der Richtung im Wesentlichen senkrecht zu der Plattenebene in einer solchen Weise gestaucht und in der gestauchten Stellung arretiert werden kann, dass durch eine mit der Stauchung in dieser Richtung verbundene Streckung des Ballonelements (103) in einer Richtung im Wesentlichen parallel zu der Plattenebene das Ballonelement (103) in dieser Richtung seinen Durchmesser derart erweitert, dass dieser größer ist als der Innendurchmesser der Unterputz- oder Hohlwanddosen (D).

## Claims

1. A tool (1) for fixing installation parts, such as sockets (S), switches or dimmers, in flush-mounted or cavity wall sockets (D) with:
• a tool body,
• a drive shaft (3) which is arranged on the tool body and can be subjected to a drive torque,
• two screwing tool elements (17, 18, 22), each having an axis of rotation, oriented with the axes of rotation parallel to one another and arranged on the tool body with a spacing from one another, and each connected to an output shaft (11, 12) and each having a free end projecting from the tool body, and
• a gear (6) connecting the drive shaft (3) to the output shafts (11, 12) and arranged on the tool body, which gear couples the drive shaft (3) to the output shafts (11, 12) in such a way that a torque applied to the drive shaft (3) is transmitted to the output shafts (11, 12) for driving them in rotation in the same direction and, via them, for rotating the screwing tool elements (17, 18, 22) connected to the output shafts (11, 12) in the same direction about their respective axis of rotation,
**characterised in that**
the transmission (6) comprises a differential gear.

2. A tool (1) according to claim 1, **characterised in that** it comprises a gearbox which is set up in such a way that a changeover possibility of the direction of rotation of the output shafts is provided, wherein in particular this changeover possibility is formed in such a way that different maximum torques are present in the screwing-in and unscrewing direction.

3. A tool (1) according to one of the preceding claims, **characterised in that** it comprises at least one slipping clutch (14) connected to the input shaft (3) or at least one of the output shafts (11, 12) for limiting a transmitted torque.

4. A tool (1) according to claim 3, **characterised in that** each of the output shafts (11, 12) is connected to the transmission (6) via a respective slipping clutch (14).

5. A tool (1) according to one of claims 3 or 4, **characterised in that** the slip clutch(es) (14) is/are adjustable to determine a maximum transmittable torque.

6. A tool (1) according to one of the preceding claims, **characterised in that** an adjusting device (15, 16, 19) is provided for adjusting the distance between the screwing tool elements (17, 18, 22), the output shafts (11, 12) each having a universal joint (13).

7. A tool (1) according to one of the preceding claims, **characterised in that** it has, on a front side on which the screwing tool elements (17, 18, 22) are arranged, an abutment element (23, 24) arranged on the tool body for abutment of an installation part (S) to be inserted into the flush-mounted or cavity wall box (D) and fixed therein.

8. A tool (1) according to claim 8, **characterised in that** it has holding means (25), in particular at least one holding magnet, for holding an installation part (S) applied to the contact element (23, 24).

9. A tool (1) according to one of claims 7 or 8, **characterised in that** the contact element (23, 24) has a contact part (24) which can be detachably and exchangeably fixed to the tool body, wherein in particular several differently shaped contact elements (23, 24) are provided for exchangeable fixing to the tool body.

10. A tool (1) according to any one of claims 7 to 9, **characterised in that** the abutment element (23, 24) is displaceable relative to the tool body in a direction substantially parallel to the axes of rotation of the screw tool elements (17, 18, 22), wherein in particular a return element (29) is provided which forces the abutment element (23, 24) into an initial stage in the direction of the free ends of the screw tool elements (17, 18, 22).

11. A tool (1) according to one of the preceding claims, **characterised in that** the screwing tool elements (17, 18, 22) are displaceable in the direction of their axes of rotation in such a way that their free ends change their respective position relative to the tool body upon such displacement, wherein in particular spring elements (21) are provided which force the screwing tool elements (17, 18, 22) into an initial position in which the free ends protrude maximally beyond the tool body.

12. A tool (1) according to one of the preceding claims, **characterised in that** the screwing tool elements (17, 18, 22) comprise bit holders (17, 18) and screw bits (22) which can be exchangeably inserted therein.

13. A tool (1) according to one of the preceding claims, **characterised in that** it has at least one position indicator, in particular a spirit level.

14. A tool (1) according to one of the preceding claims, **characterised in that** it comprises a drive motor connected to the drive shaft (3).

15. A tool (1) according to any one of claims 1 to 13, **characterised in that** the drive shaft (3) protrudes with a rear free end beyond the tool body and has a connection structure at the rear free end for connection to a clamping sleeve of a motor-driven drilling or screwing device.

16. A set consisting of a tool (1) according to one of the preceding claims and a marking template (100) for marking the installation position(s) of one or more add-on parts (S) in flush-mounted or cavity wall boxes (D), the marking template (100) having a template plate (101) with marking marks (114) and at least one centring element (102) which is fixed to the template plate (101) so as to be displaceable relative thereto in a longitudinal direction of the plate, can be introduced into a flush-mounted or cavity wall box (D) and can be fixed therein in a centring manner.

17. A set according to claim 16, **characterised in that** the centring element (102) comprises a substantially spherically formed, elastic balloon element (103) which is compressible in a direction substantially perpendicular to a plate plane of the template plate (101) and which, in an uncompressed state, has an outer diameter which is smaller than the inner diameter of the flush-mounted or cavity wall boxes (D), compression and locking means (104, 108, 109) being provided, by means of which the balloon element (103) can be compressed in the direction substantially perpendicular to the plane of the plate in such a way and can be locked in the compressed position that, as a result of an extension of the balloon element (103) in a direction substantially parallel to the plane of the plate associated with the compression in this direction, the balloon element (103) expands its diameter in this direction in such a way that this is greater than the internal diameter of the flush-mounted or cavity wall boxes (D).

## Revendications

1. Outil (1) pour fixer des éléments de montage, tels que des prises (S), des interrupteurs ou des variateurs, dans des prises murales encastrées ou creuses (D) avec :
• un corps d'outils,
• un arbre d'entraînement (3) qui est disposé sur le corps de l'outil et qui peut être soumis à un couple d'entraînement,
• deux éléments d'outil de vissage (17, 18, 22), ayant chacun un axe de rotation, orientés avec les axes de rotation parallèles l'un à l'autre et disposés sur le corps de l'outil avec un espacement l'un par rapport à l'autre, et chacun étant relié à un arbre de sortie (11, 12) et ayant chacun une extrémité libre faisant saillie du corps de l'outil, et
• un engrenage (6) reliant l'arbre d'entraînement (3) aux arbres de sortie (11, 12) et disposé sur le corps de l'outil, lequel engrenage couple l'arbre d'entraînement (3) aux arbres de sortie (11, 12) de telle sorte qu'un couple appliqué à l'arbre d'entraînement (3) est transmis aux arbres de sortie (11, 12) pour les entraîner en rotation dans le même sens et, par leur intermédiaire, pour faire tourner les éléments d'outil de vissage (17, 18, 22) reliés aux arbres de sortie (11, 12) dans le même sens autour de leur axe de rotation respectif,
**caractérisé en ce que**
la transmission (6) comprend un différentiel.

2. Outil (1) selon la revendication 1, **caractérisé en ce qu'**il comprend une boîte de vitesses qui est disposée de telle manière qu'une possibilité de changement du sens de rotation des arbres de sortie est prévue, cette possibilité de changement étant notamment formée de telle manière que différents couples maximums sont présents dans le sens du vissage et du dévissage.

3. Outil (1) selon l'une des revendications précédentes, **caractérisé en ce qu'**il comporte au moins un embrayage à friction (14) relié à l'arbre d'entrée (3) ou à au moins un des arbres de sortie (11, 12) pour limiter un couple transmis.

4. Outil (1) selon la revendication 3, **caractérisé en ce que** chacun des arbres de sortie (11, 12) est relié à la transmission (6) par un embrayage à glissement respectif (14).

5. Outil (1) selon l'une des revendications 3 ou 4, **caractérisé en ce que** le ou les embrayages à friction (14) est/sont réglable(s) pour déterminer un couple maximal transmissible.

6. Outil (1) selon l'une des revendications précédentes, **caractérisé en ce qu'**un dispositif de réglage (15, 16, 19) est prévu pour régler la distance entre les éléments de l'outil de vissage (17, 18, 22), les arbres de sortie (11, 12) ayant chacun un joint universel (13).

7. Outil (1) selon l'une des revendications précédentes, **caractérisé en ce qu'**il présente, sur une face frontale sur laquelle sont disposés les éléments de l'outil de vissage (17, 18, 22), un élément de butée (23, 24) disposé sur le corps de l'outil pour l'appui d'une pièce de montage (S) à insérer dans la boîte d'encastrement ou de mur creux (D) et à y fixer.

8. Outil (1) selon la revendication 8, **caractérisé en ce qu'**il comporte des moyens de maintien (25), en particulier au moins un aimant de maintien, pour maintenir une pièce de montage (S) appliquée sur l'élément de contact (23, 24).

9. Outil (1) selon l'une des revendications 7 ou 8, **caractérisé en ce que** l'élément de contact (23, 24) présente une partie de contact (24) qui peut être fixée de manière amovible et interchangeable sur le corps de l'outil, plusieurs éléments de contact (23, 24) de formes différentes étant notamment prévus pour la fixation interchangeable sur le corps de l'outil.

10. Outil (1) selon l'une des revendications 7 à 9, **caractérisé en ce que** l'élément de butée (23, 24) est déplaçable par rapport au corps de l'outil dans une direction sensiblement parallèle aux axes de rotation des éléments d'outil de vissage (17, 18, 22), un élément de rappel (29) étant notamment prévu, qui pousse l'élément de butée (23, 24) dans un premier temps en direction des extrémités libres des éléments d'outil de vissage (17, 18, 22).

11. Outil (1) selon l'une des revendications précédentes, **caractérisé en ce que** les éléments d'outil de vissage (17, 18, 22) sont déplaçables dans la direction de leurs axes de rotation de telle sorte que leurs extrémités libres modifient leur position respective par rapport au corps de l'outil lors d'un tel déplacement, des éléments de ressort (21) étant notamment prévus qui poussent les éléments d'outil de vissage (17, 18, 22) dans une position initiale dans laquelle les extrémités libres dépassent au maximum du corps de l'outil.

12. Outil (1) selon l'une des revendications précédentes, **caractérisé en ce que** les éléments de l'outil de vissage (17, 18, 22) comprennent des porte-embouts (17, 18) et des embouts de vissage (22) qui peuvent y être insérés de manière interchangeable.

13. Outil (1) selon l'une des revendications précédentes, **caractérisé en ce qu'**il possède au moins un indicateur de position, notamment un niveau à bulle.

14. Outil (1) selon l'une des revendications précédentes, **caractérisé en ce qu'**il comporte un moteur d'entraînement relié à l'arbre d'entraînement (3).

15. Outil (1) selon l'une des revendications 1 à 13, **caractérisé en ce que** l'arbre d'entra nement (3) dépasse du corps de l'outil par une extrémité libre arrière et présente à l'extrémité libre arrière une structure de liaison pour le raccordement à une douille de serrage d'un dispositif de perçage ou de vissage motorisé.

16. Ensemble composé d'un outil (1) selon l'une des revendications précédentes et d'un gabarit de marquage (100) pour marquer la ou les positions de montage d'une ou plusieurs pièces rapportées (S) dans des boîtes d'encastrement ou des boîtes pour murs creux (D), le gabarit de marquage (100) comportant une plaque de gabarit (101) avec des marques de marquage (114) et au moins un élément de centrage (102) qui est fixé à la plaque de gabarit (101) de manière à pouvoir coulisser par rapport à celle-ci dans la direction longitudinale de la plaque, qui peut être introduit dans un boîtier (D) encastré ou à paroi creuse et qui peut y être fixé de manière centrée.

17. Ensemble selon la revendication 16, **caractérisé en ce que** l'élément de centrage (102) comprend un élément de ballon élastique (103) de forme sensiblement sphérique, qui est compressible dans une direction sensiblement perpendiculaire à un plan de la plaque de gabarit (101) et qui, à l'état non comprimé, présente un diamètre extérieur qui est inférieur au diamètre intérieur des boîtiers (D) encastrés ou à paroi creuse, des moyens de compression et de verrouillage (104, 108, 109) étant prévus, au moyen duquel l'élément de ballon (103) peut être comprimé dans la direction sensiblement perpendiculaire au plan de la plaque de telle manière et peut être bloqué dans la position comprimée que, par suite d'une extension de l'élément de ballon (103) dans une direction sensiblement parallèle au plan de la plaque associée à la compression dans cette direction, l'élément de ballon (103) élargit son diamètre dans cette direction de telle manière que celui-ci est supérieur au diamètre intérieur des boîtes d'encastrement ou des boîtes à parois creuses (D).
